# EUROPEAN PATENT APPLICATION

(11) **EP 4 694 559 A1**
(43) Date of publication of application: **11.02.2026**
(21) Application number: 24832285.1
(22) Date of filing: 30.05.2024
(51) Int. Cl.: H04W 76/19, H04W 76/18, H04W 36/00, H04W 24/10, H04W 24/08, H04W 76/15

(54) **METHOD AND APPARATUS FOR REPORTING FAST MCG RECOVERY INFORMATION IN NEXT GENERATION MOBILE COMMUNICATION SYSTEM**

(30) Priority: 29.06.2023 KR 20230084180
(71) Applicant: Samsung Electronics Co., Ltd., Suwon-si, Gyeonggi-do 16677 (KR)
(72) Inventor: KIM, Sangbum, Suwon-si, Gyeonggi-do 16677 (KR)
(74) Representative: Gulde & Partner
(86) International application number: PCT/KR2024/007400
(87) International publication number: WO 2025/005503

(57) **Abstract**

The present invention relates to a method for a terminal, comprising the steps of: detecting radio link failure (RLF) for a master cell group (MCG) among the MCG and a secondary cell group (SCG), in which dual connectivity (DC) is set for the terminal; transmitting a first radio resource control (RRC) message to the SCG if at least one condition for transmitting the first RRC message including information indicating the RLF for the MCG to the SCG is satisfied; if a second RRC message including information related to a target cell is received from the SCG, performing a procedure for establishing a connection with the target cell on the basis of the information related to the target cell; and identifying connection failure with the target cell, wherein first information about the RLF for the MCG is stored in an RLF report, and second information about the connection failure is additionally stored in the RLF report in which the first information is stored.

## Description

### [Technical Field]

The present disclosure relates to technology for reporting information related to a fast MCG link recovery operation.

### [Background Art]

5G mobile communication technology defines a wide frequency band to enable fast transmission speed data rates and new services, and can be implemented not only in sub 6GHz bands, such as 3.5 gigahertz (3.5GHz), but also in ultra-high frequency band ('above 6GHz'), also known as millimeter wave (mmWave), such as 28GHz and 39GHz. In addition, 6G mobile communication technology, which is called a system beyond 5G, is being considered to be implemented in a terahertz band (e.g., from 95GHz to 3 terahertz (3THz) band) to achieve a data rate 50 times faster and an ultra low-latency time reduced to one-tenth, compared to the 5G mobile communication technology.

The goal in the early stage of the 5G mobile communication technology is to support services and meet performance requirements for enhanced mobile broadband (eMBB), ultra-reliable low-latency communications (URLLC), and massive machine-type communications (mMTC). To achieve the goal, standardization is underway for beamforming and massive MIMO to mitigate path loss and increase a propagation range of radio waves in an ultra-high frequency band, support for various numerologies (such as an operation of multiple subcarrier spacings) and dynamic operation of slot formats for efficient utilization of ultra-high frequency resources, initial access technologies to support multi-beam transmission and wideband, definition and operation of a bandwidth part (BWP), new channel coding methods such as a low density parity check (LDPC) code for large-capacity data transmission and a polar code for highly reliable transmission of control information, L2 pre-processing, network slicing to provide dedicated networks specialized to specific services, etc.

Currently, discussions are underway for improvement and performance enhancement of the initial 5G mobile communication technology in consideration of services that the 5G mobile communication technology is intended to support. Physical layer standardization is underway for technologies such as vehicle-to-everything (V2X), which assists in driving decisions of autonomous vehicles and enhances user convenience based on their own location and status information transmitted by vehicles, new radio unlicensed (NR-U), which aims for system operation meeting various regulatory requirements in unlicensed bands, NR UE power saving, a non-terrestrial network (NTN), which is direct UE-satellite communication to secure coverage in areas where communication with terrestrial networks is impossible, and positioning.

In addition, standardization of wireless interface architecture/protocol fields is also underway for technologies such as intelligent factories (industrial Internet of Things, IIoT) that support new services through integration and convergence with other industries, integrated access and backhaul (IAB) that provides nodes to extend network service area by integrating and supporting a wireless backhaul link and an access link, mobility enhancement including conditional handover and dual active protocol stack (DAPS) handover, and 2-step RACH for NR that simplifies a random access procedure, and standardization of system architecture/service fields is also underway for 5G baseline architecture (e.g., service based architecture, service based interface) for combining network functions virtualization (NFV) and software-defined networking (SDN) technologies, mobile edge computing (MEC) that receives services based on a location of a UE, etc.

When such 5G mobile communication systems are commercialized, connected devices, experiencing explosive growth, will be linked to communication networks. Therefore, it is expected that the enhancement of the functions and performance of 5G mobile communication systems and the integrated operation of connected devices will be required. To this end, new research is scheduled to be conducted on eXtended reality (XR) to efficiently support augmented reality (AR), virtual reality (VR), mixed reality (MR), etc., enhancing 5G performance and reducing complexity through artificial intelligence (AI) and machine learning (ML), supporting AI services, supporting metaverse services, drone communications, etc.

In addition, the advancement of the 5G mobile communication systems may provide the foundation for the development of not only 6G mobile communication technologies, including multi-antenna transmission technologies such as a new waveform, full-dimensional multiple-input multiple-output (FD-MIMO), array antennas, and large-scale antennas to ensure coverage in a terahertz band, high-dimensional spatial multiplexing technology using metamaterial-based lenses and antennas and orbital angular momentum (OAM), and reconfigurable intelligent surface (RIS) technology to enhance coverage of a terahertz band signal, but also for 6G mobile communication technologies, including full-duplex technology, Al-based communication technologies that utilize satellites and artificial intelligence (AI) from the design stage and incorporate end-to-end AI support functions to achieve system optimization to enhance frequency efficiency and improve system networks, and next-generation distributed computing technologies that utilize ultra-high-performance communication and computing resources to realize highly complex services beyond the limitations of UE computing capabilities.

Meanwhile, in a case where a terminal is connected to base stations according to dual connectivity, when a connection problem with the SN occurs, the problem is reported to the MN, triggering an SCG re-establishment operation. However, when a connection problem with the MN occurs, an RLF declaration and connection re-establishment operation may be performed. In this case, to address the time required for connection state recovery, the fast MCG link recovery operation has been introduced.

### [Disclosure of Invention]

### [Technical Problem]

The present disclosure is directed to providing a method for reporting information related to a fast MCG link recovery operation to a network via an existing reporting mechanism, when the fast MCG link recovery operation is performed.

### [Solution to Problem]

According to an aspect of the present disclosure, there is provided a method performed by a terminal in a wireless communication system, the method including: detecting a radio link failure (RLF) for a master cell group (MCG) of the MCG and a secondary cell group (SCG) in which dual connectivity (DC) is configured for the terminal; transmitting a first radio resource control (RRC) message to the SCG when at least one condition for transmitting the first RRC message including information indicating the RLF for the MCG to the SCG is satisfied; performing a procedure for configuring a connection with a target cell based on information related to the target cell, when a second RRC message including the information related to the target cell is received from the SCG; and confirming a connection failure with the target cell, in which first information about the RLF for the MCG is stored in an RLF report, and the second information about the connection failure is additionally stored in the RLF report in which the first information is stored.

### [Advantageous Effects of Invention]

According to the example of the present disclosure, when a fast MCG link recovery operation is triggered, related information can be reported to the network using an existing reporting mechanism. Even if a handover failure occurs during the fast MCG link recovery operation, both fast MCG link recovery-related information and handover failure-related information can be appropriately reported to the network.

### [Brief Description of Drawings]

FIG. 1 is a diagram illustrating the structure of a next-generation mobile communication system according to one embodiment of the present disclosure.
FIG. 2 is a diagram illustrating a Radio Link Monitoring (RLM) operation according to one embodiment of the present disclosure.
FIG. 3 is a diagram illustrating the Radio Link Failure (RLF) operation according to one embodiment of the present disclosure.
FIG. 4 is a diagram illustrating a fast MCG link recovery operation according to one embodiment of the present disclosure.
FIG. 5 is a flowchart of a procedure for configuring the fast MCG link recovery operation according to one embodiment of the present disclosure.
FIG. 6 is a flowchart illustrating operations for reporting fast MCG link recovery-related information according to one embodiment of the present disclosure.
FIG. 7 is a flowchart illustrating operations for a UE reporting the fast MCG link recovery-related information according to one embodiment of the present disclosure.
FIG. 8 is a diagram illustrating a problem in which previous RLF report information is lost due to a handover failure according to one embodiment of the present disclosure.
FIG. 9 is a flowchart illustrating operations for a UE reporting the fast MCG link recovery-related information after the handover failure according to one embodiment of the present disclosure.
FIG. 10 is a flowchart illustrating operations for the UE reporting the fast MCG link recovery-related information after the handover failure according to one embodiment of the present disclosure.
FIG. 11 is a block diagram illustrating the internal structure of a terminal according to the present disclosure.
FIG. 12 is a block diagram illustrating the configuration of a base station according to the present disclosure.

### [Mode for the Invention]

Hereinafter, In the following description of the present disclosure, detailed descriptions of related known functions or configurations will be omitted when they are deemed to unnecessarily obscure the gist of the present disclosure. Embodiments of the present disclosure will be described below with reference to the attached drawings. The terms described below are defined based on their functions in the present disclosure and may vary depending on the intentions or practices of users and operators. Therefore, their definitions should be based on the overall content of this specification.

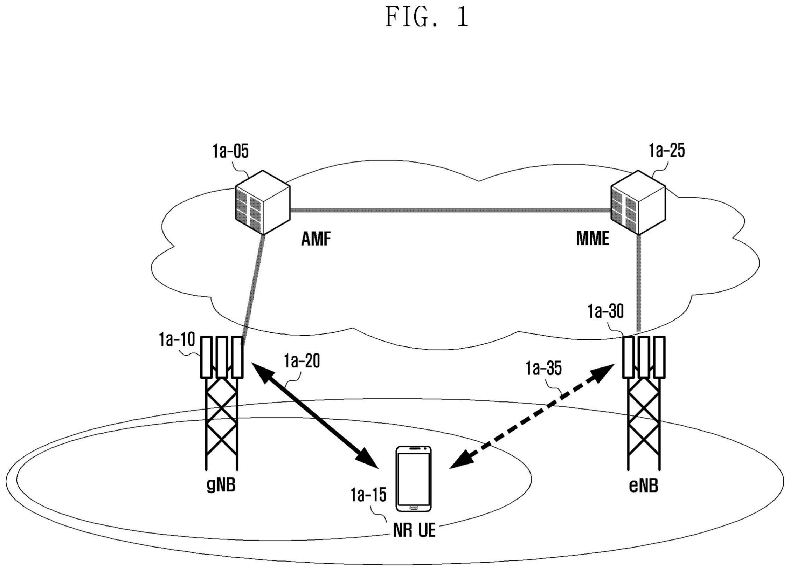

FIG. 1 is a diagram illustrating the structure of a next-generation mobile communication system according to one embodiment of the present disclosure.

Referring to FIG. 1, as illustrated, a radio access network of a next-generation mobile communication system (New Radio, NR) includes a next-generation base station (New Radio Node B, hereinafter referred to as gNB) 1a-10 and an access and mobility management function (AMF) (New Radio Core Network) 1a-05. A user equipment (New Radio User Equipment, hereinafter referred to as NR UE or UE) 1a-15 connects to an external network via the gNB 1a-10 and the AMF 1a-05.

In FIG. 1, the gNB corresponds to the Evolved Node B (eNB) of the existing long term evolution (LTE) system. The gNB connects to the NR UE via a wireless channel and may provide superior service compared to the existing Node B (1a-20). In next-generation mobile communication systems, all user traffic is serviced through a shared channel. Therefore, an apparatus is required to collect status information, such as the buffer status of UEs, available transmit power status, and channel status, and perform scheduling. This is handled by the gNB 1a-10. A single gNB typically controls a plurality of cells. To achieve ultra-high-speed data transmission compared to existing LTE, the next-generation mobile communication system may have the existing maximum bandwidth or more and utilize Orthogonal Frequency Division Multiplexing (hereinafter referred to as OFDM) as a wireless access technology, incorporating additional beamforming technology. Furthermore, Adaptive Modulation & Coding (hereinafter referred to as AMC) is applied, determining the modulation scheme and channel coding rate based on the channel conditions of the UE.

The AMF 1a-05 performs functions such as mobility support, bearer configuration, and quality of service (QoS) configuration, or the like. The AMF is an apparatus that handles various control functions as well as the mobility management function for the UE and is connected to a plurality of base stations. Furthermore, the next-generation mobile communication system may interoperate with the existing LTE system and the AMF is connected to a mobility management entity (MME) 1a-25 via a network interface. The MME is connected to an eNB 1a-30 which is the existing base station. A UE supporting LTE-NR Dual Connectivity may transmit and receive data while maintaining the connection to both the gNB and the eNB (la-35).

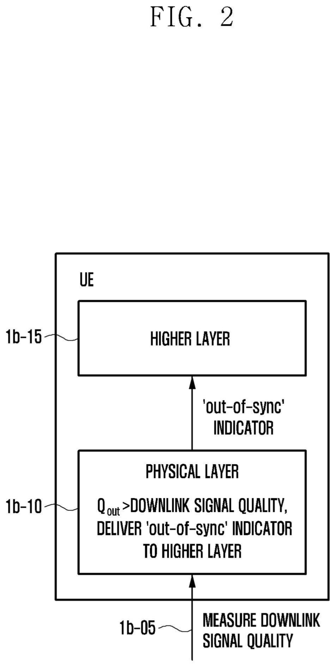

FIG. 2 is a diagram illustrating a Radio Link Monitoring (RLM) operation in the present disclosure.

Referring to FIG. 2, the physical (PHY) layer of the UE measures the quality of a downlink signal from a serving cell's cell-specific reference signal (CRS) (1b-05). The physical layer of the UE then determines whether the measured signal quality is below a specific threshold Qₒᵤₜ (1b-10). Here, the threshold is a signal quality value corresponding to a specific block error rate (BLER) measured on the physical downlink control channel (PDCCH). When the signal quality is below the specific threshold Qₒᵤₜ, the physical layer delivers an 'out-of-sync' indicator (indication) to a higher layer. This operation is referred to as RLM in the LTE technology. When the indicator is delivered to the higher layer more than a certain number of times, the higher layer runs a specific timer, and when the timer expires, the RLF is declared (1b-15).

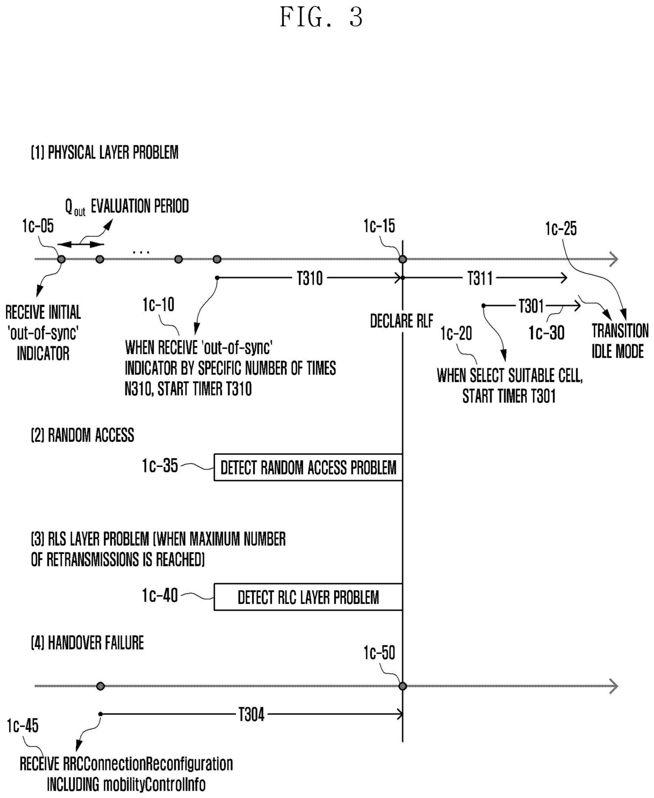

FIG. 3 is a diagram illustrating the Radio Link Failure (RLF) operation in the present disclosure.

As previously described, the RLF may be declared based on the results of the RLM operation. More specifically, referring to FIG. 3, the UE physical layer determines whether the downlink signal quality measured from the serving cell's CRS is below the specific threshold Qₒᵤₜ, at a specific interval Qₒᵤₜ evaluation period. When the measured signal quality is below the specific threshold Qₒᵤₜ, the physical layer delivers an 'out-of-sync' indicator to the higher layer. After the initial indicator is delivered to the higher layer (1c-05), when the out-of-sync indicator is delivered to the higher layer by a specific number of times N310, the higher layer runs a specific timer T310 (1c-10). In addition, the physical layer determines whether the downlink signal quality measured from the CRS of the serving cell is higher than a specific threshold Qᵢₙ. When the measured signal quality is higher than the specific threshold Qᵢₙ, the physical layer delivers an 'in-sync' indicator to the higher layer. When the in-sync indicator is delivered to the higher layer by a specific number of times, the running T310 timer in the higher layer is stopped. When the T310 timer expires without being stopped, the higher layer declares the RLF (1c-15). After the RLF is declared, the UE runs another timer T311. Then, the UE searches for a new suitable cell, and when the UE does not find the new suitable cell until the time T311 expires, the UE transitions to an idle mode (1c-25). Meanwhile, when the new suitable cell is found before the timer T311 expires, the UE runs the T301 timer based on this and performs a re-establishment process with the cell (1c-20). In this case, when the re-establishment is not successfully completed before the T301 timer expires, the UE transitions to the idle mode (1c-30). When the re-establishment is successful, the UE remains in a connected mode in the cell.

Meanwhile, the RLF may be declared by the RLM operation described above, or by other conditions. For example, as illustrated in (2) of FIG. 3, the RLF may be declared even when a random access fails (1c-35). As another example, as illustrated in (3) of FIG. 3, an RLF is declared even when the maximum number of retransmissions is reached at a radio link control (RLC) layer, for example, when a packet is not successfully delivered (1c-40). The T301 and T311 running-related operations described above are described in [Table 1] below.

**[Table 1]**

| **Timer** | **Start** | **Stop** | **At expiry** |
|---|---|---|---|
| T301 | Upon transmission of *RRCReestabilshmentRequest* | Upon reception of *RRCReestablishment* or *RRCSetup* message as well as when the selected cell becomes unsuitable | Go to RRC_IDLE |
| T311 | Upon initiating the RRC connection re-establishment procedure | Upon selection of a suitable NR cell or a cell using another RAT. | Enter RRC_IDLE |

As illustrated in (4) of FIG. 3, the RLF may be declared even when the handover fails. When the UE receives an RRCConnectionReconfiguration message including handover configuration information, e.g., a mobilityControlInfo IE (1c-45), the UE runs the T304 timer. The T304 timer value is provided in the mobilityControlInfo. When random access with the target cell is not successfully completed before the T304 timer expires, the handover is considered failed and the RLF is declared (1c-50).

The information collected when the RLF occurs in the UE is useful for optimizing cell coverage. Therefore, the UE stores this information when the RLF occurs, and thereafter, when the UE successfully transitions to the connected mode, the stored information is reported to the base station. This report is referred to as an RLF Report, and in this case, the information reported is as follows.
- plmn-IdentityList
- measResultLastServCell
- measResultNeighCells
- locationlnfo
- failedPCellld
- previousPCellld
- timeConnFailure
- C-RNTI used in the source PCell
- connectionFailureType

After the RLF occurs, the UE performs the cell selection and RRC re-establishment. In this case, the collected information may also be useful for optimizing the cell coverage.

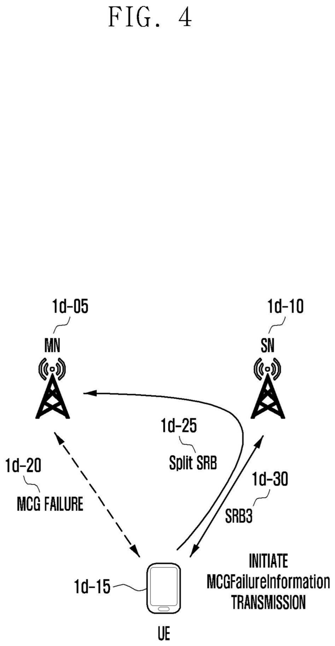

FIG. 4 is a diagram illustrating a fast MCG link recovery operation according to one embodiment of the present disclosure.

A UE 1d-15 in which dual connectivity is configured may transmit and receive data by connecting to two base stations, that is, a Master Node (MN) 1d-05 and a Secondary Node (SN) 1d-10. When a problem occurs in the connection with the SN, the UE may report to the MN that there is a problem in the connection with the SN. Upon receiving this report, the MN may re-establish a Secondary Cell Group (SCG). Meanwhile, when a problem occurs in the connection with the MN, the UE declares the RLF and performs a re-establishment process. However, restoring the connection through this re-establishment process takes a relatively long time and requires reapplying most configurations.

To overcome these shortcomings, the Rel-16 NR standard has introduced a fast master cell group (MCG) link recovery technology. In this technology, when the UE configured for Dual Connectivity (DC) experiences a connection problem with MN, the UE declares the RLF and then transmits a predetrmined radio resource control (RRC) message, MCGFailurelnformation, indicating the MCG failure (1d-20), to the SN. When the SN and a split signaling radio bearer (SRB) 1d-25 are configured, the UE transmits the RRC message to the MN via the split SRB, i.e., via the SN. In contrast, when the SN and SRB 3 1d-30 are configured, the UE transmits the RRC message to the MN via the SN through the SRB 3. When the SRB 3 is used, a ULInformationTransferMRDC message is transmitted to the SN as the RRC message containing the MCGFailureInformation message. Along with the transmission of the MCGFailureInformation, a predetermined timer, T316, is run, and the re-establishment operation is postponed until the run T316 timer expires. When an RRCRelease or RRCReconfiguration message configuring the handover is received from the SN before the T316 timer expires, the UE stops the T316 timer. Specifically, the T316 timer is run when the MCGFailureInformation message is transmitted, and is stopped when at least one of the following conditions is satisfied.
- When receiving the RRCRelease message
- When receiving an RRCReconfiguration message containing a reconfigurationWithSync IE for a primary cell (PCell)
- When receiving a MobilityFromNRCommand message (for inter-radio access technology (RAT) handover)

When the re-establishment operation is triggered

When the SRB 3 is used to transmit the MCGFailureInformation message, the SN transmits a DLInformationTransferMRDC message containing the RRCRelease or handover-configuring RRCReconfiguration message to the UE. When the SN and Split SRB or SRB3 are not configured, the UE cannot perform the fast MCG link recovery operation.

In the present disclosure, a case where the UE does not receive the RRCRelease or handover-configuring RRCReconfiguration message until the T316 timer expires despite transmitting the MCGFailureInformation is referred to as a fast MCG link recovery failure. When the fast MCG link recovery failure occurs, the UE triggers the re-establishment operation.

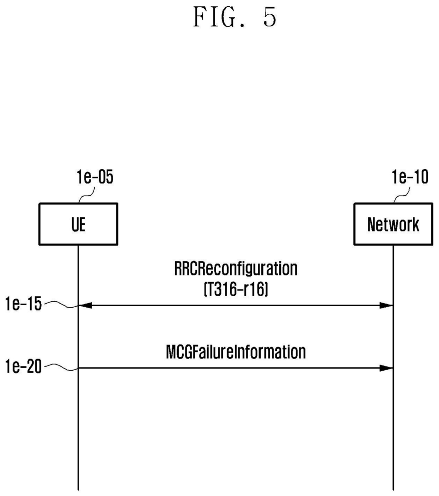

FIG. 5 is a flowchart of a procedure for configuring the fast MCG link recovery operation according to one embodiment of the present disclosure.

The UE 1e-05 receives the RRCReconfiguration message containing T316 configuration information from the base station 1e-10 (1e-15). When the RLF occurs during the connection with the MN, the UE 1e-05 transmits the MCGFailureInformation message to the network (1e-10, e.g., SN) (1e-20). Here, the MCGFailureInformation message includes information as illustrated in [Table 2] below.

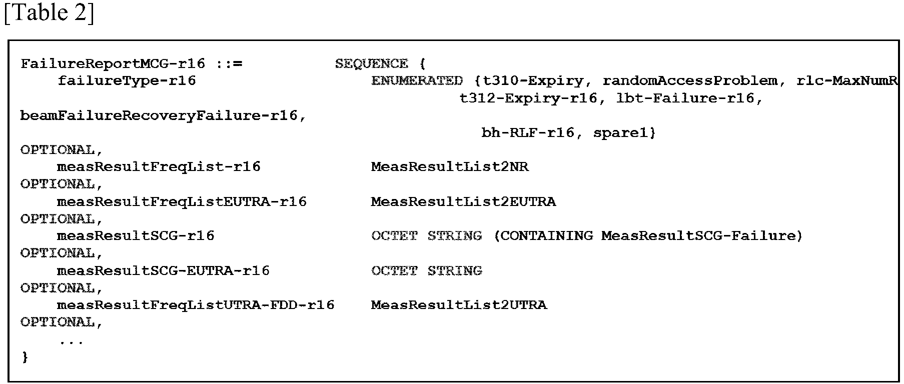

Referring to [Table 2], failureType is used to indicate the reason of the connection failure with the MCG. Additionally, measResultFreqList, measResultFreqListEUTRA, and measResultFreqListUTRA-FDD, included in the MCGFailureInformation message, contain measurement values for the NR frequency, evolved-universal terrestrial radio access (E-UTRA) frequency, or UTRA frequency configured in measConfig. Furthermore, measResultSCG and measResultSCG-EUTRA contain measurement values for the NR frequency or E-UTRA frequency configured in measConfig of the SCG.

When the connection failure with the MCG occurs and the RLF is declared, the UE stores the information valid at that time. That is, the RLF contents are stored in the UE, and when the UE transitions to connected mode, the RLF Report containing the stored RLF contents is reported to the base station. The present disclosure is characterized in that the UE reports information related to fast MCG link recovery to the network using a predetermined reporting mechanism (e.g., an RLF Report). The present embodiments may be applied not only to NR-DC but also to EN-DC or NE-DC scenarios.

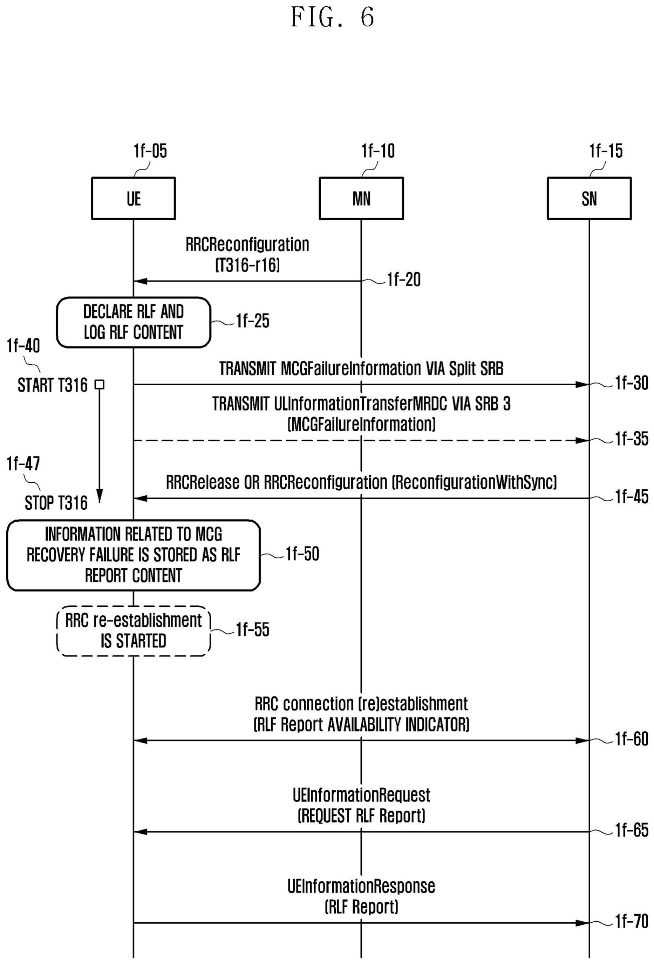

FIG. 6 is a flowchart illustrating operations for reporting fast MCG link recovery-related information according to one embodiment of the present disclosure.

Referring to FIG. 6, a MN base station 1f-10 configures the fast MCG link recovery operation for a UE 1f-05 configured with Dual Connectivity using a predetermined RRC message, RRCReconfiguration (1f-20). This configuration includes a T316 timer value.

Thereafter, the UE 1f-05 declares the RLF based on the occurrence of the connection failure between MNs and logs the RLF content (1f-25). Furthermore, when predetermined conditions are satisfied, the UE 1f-05 transmits an MCGFailureInformation message to the SN base station 1f-15 via the Split SRB (1f-30) or SRB 3 (1f-35). For example, as described above, the MCGFailureInformation message may be transmitted to the SN 1f-15 via the split SRB (1f-30), or the MCGFailureInformation message may be included in ULInformationTransferMRDC and transmitted to the SN 1f-15 via the SRB 3 (1f-35). Here, the predetermined conditions are as follows:
- if T316 is configured
- if SCG transmission is not suspended
- if the SCG is not deactivated
- if neither PSCell change nor PSCell addition is ongoing (i.e. timer T304 for the NR PSCell is not running in case of NR-DC or timer T307 of the E-UTRA PSCell is not running in NE-DC)

When the MCGFailureInformation message is not triggered, the UE 1f-05 may store the reason for not triggering the fast MCG link recovery operation and then report the reason to the network. In this case, the information stored as the reason for not triggering the fast MCG link recovery operation may include the following indicator information.
- An indicator to indicate if T316 is (not) configured (i.e. if fast MCG Recovery has been configured)
- An indicator to indicate if SCG transmission is (not) suspended
- An indicator to indicate if neither PSCell change nor PSCell addition is ongoing (i.e. timer T304 for the NR PSCell is not running in case of NR-DC or timer T307 of the E-UTRA PSCell is not running in NE-DC)
- time information to indicate between MCG failure (or transmitting MCGFailureInformation) and suspending SCG transmission
- time information to indicate between MCG failure (or transmitting MCGFailureInformation) and the initiation of PSCell change (or PSCell addition)

The proposed new information may be stored as RLF Report content by the UE only when AS security is activated. Furthermore, the UE may configure the new indicators in bitmap form and report the new indicators to the base station.

When the SN 1f-15 receives the MCGFailureInformation message transmitted by the UE 1f-05, the SN 1f-15 delivers the MCGFailureInformation message to the MN 1f-10. In this case, the UE 1f-05 runs the T316 timer (1f-40). In this case, when the RRCRelease message or the RRCReconfiguration message containing handover configuration information is received from the SN (1f-15) before the running timer 316 expires (1f-45), the UE 1f-05 considers the fast MCG link recovery operation successful and stops the running T316 timer (1f-47). Additionally, after transmitting the MCGFailureInformation message, the UE 1f-05 may store information about the RRC message received in response thereto and then report the stored information to the network. The stored information may include the following indicator information.
- An indicator to indicate if RRCRelease (Redirection) or RRCReconfiguration (HO command) is received
- If RRCRelease is received, redirection-related information included in the RRCRelease, e.g. information included in ReedirectedCarrierInfo IE
- Serving cell/neighboring cells measurement results at the reception of RRCRelease
- If RRCReconfiguration is received, Handover-related information included in RRCReconfiguration, e.g. target cell-related info (PCI, CGI of target cell)
- Serving cell/neighboring cells measurement results at the reception of RRCReconfiguration

The proposed new information may be stored by the UE as RLF Report content only when AS security is activated. Furthermore, the UE may configure the new indicators in bitmap form and report the new indicators to the base station.

The UE 1f-05 according to the example of the present disclosure may store the proposed information as RLF Report content.

Conversely, when the UE 1f-05 does not receive the RRCRelease message or the RRCReconfiguration message containing the handover configuration information from the SN (1f-15) until the timer T316 expires, the fast MCG link recovery operation is considered to have failed. For example, the UE 1f-05 may have a poor wireless link with the SN 1f-15, and thus, the MCGFailureInformation may not be transmitted to the SN 1f-15, or the RRCRelease or RRCReconfiguration message configuring the handover from the SN 1f-15 may not be received by the UE. Alternatively, the information provided by the UE 1f-05 may not be delivered from the SN 1f-15 to the MN 1f-10, or the MN 1f-10 may not make any decision even after receiving the information provided by the UE 1f-05 from the SN 1f-15. In this case, the UE 1f-05 may store information indicating a problem with the SCG link and then report the stored information to the network. In this case, the information stored in the UE may include the following indicator information.
- An indicator if SCG transmission is (not) suspended
- An indicator if SCG is deactivated (e.g. SCG may deactivate while not identifying MCG RLF and MCGFailureInformation)
- time information to indicate between the transmission of MCGFailureInformation and suspending SCG transmission
- time information to indicate between the transmission of and the initiation of PSCell change (or PSCell addition)

The proposed new information may be stored as RLF Report content by the UE only when the AS security is activated. Furthermore, the UE may configure the new indicators in bitmap form and report the configured new indicators to the base station.

When the fast MCG link recovery operation fails, the UE 1f-05 triggers an RRC re-establishment operation (1f-55). The UE 1f-05 then performs an RRC (re)establishment operation to transition to connected mode at a predetermined base station (1f-60). While the present drawing illustrates the SN as the base station performing the RRC connection (re)establishment, the present disclosure is not limited thereto, and the UE may perform connection (re)establishment operations with other base stations. In this case, the UE 1f-05 includes an availability indicator indicating that the RLF Report is stored in the RRCSetupComplete or RRCReetablishmentComplete message, and transmits to the base station that has triggered the RRC connection re-establishment. The base station requests the reporting of the RLF Report using a UEInformationRequest message (1f-65). Upon receiving the request, the UE 1f-05 reports the stored RLF Report to the base station using a UEInformationResponse message (1f-70).

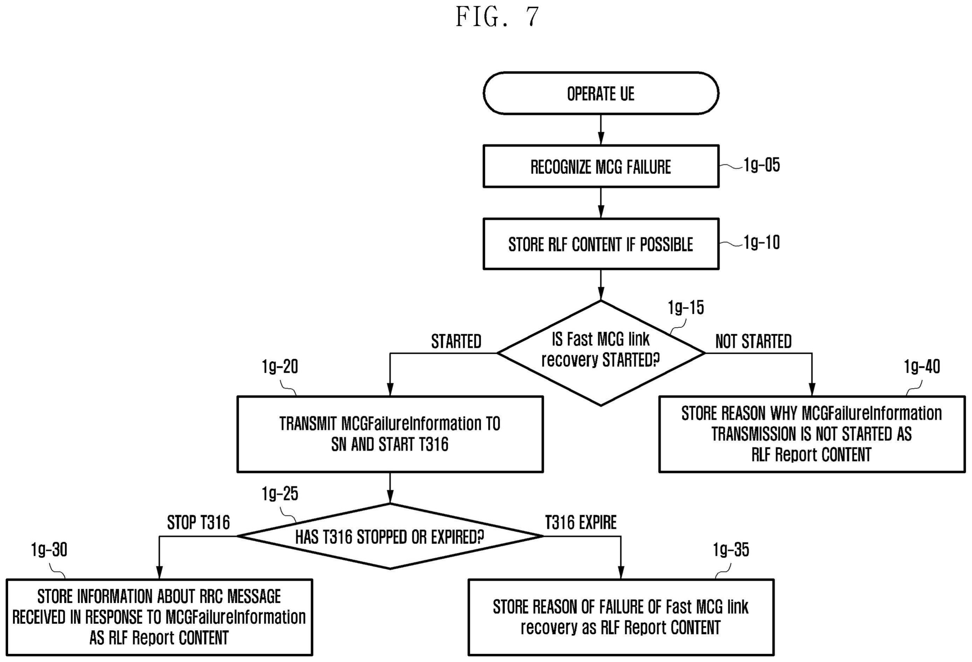

FIG. 7 is a flowchart illustrating operations for the UE reporting the fast MCG link recovery-related information according to one embodiment of the present disclosure.

In Step 1g-05, the UE recognizes the MCG failure.

In Step 1g-10, the UE stores valid information related to the MCG failure as RLF content.

In Step 1g-15, the UE determines whether the conditions for performing the fast MCG link recovery operation are satisfied and the transmission operation of the MCGFailureInformation message is triggered.

In Step 1g-20, when the Split SRB or SRB 3 is configured and the conditions for performing the fast MCG link recovery operation are satisfied, the UE transmits MCGFailureInformation to the SN base station and runs the T316 timer.

In Step 1g-25, the UE determines whether the running of the T316 timer has been stopped or expired.

In Step 1g-30, when the running of the T316 timer has been stopped, the UE additionally stores information related to the RRCReconfiguration or RRCRelease message received in response to the previously transmitted MCGFailurelnformation message in the RLF Report content. In this case, the following indicator information may be stored in the RLF Report content.
- An indicator to indicate if RRCRelease (Redirection) or RRCReconfiguration (HO command) is received
- If RRCRelease is received, Redirection-related information included in the RRCRelease, e.g. information included in ReedirectedCarrierInfo IE
- Serving cell/neighboring cells measurement results at the reception of RRCRelease
- If RRCReconfiguration is received, Handover-related information included in RRCReconfiguration, e.g. target cell-related info (PCI, CGI of target cell)
- Serving cell/neighboring cells measurement results at the reception of RRCReconfiguration

In Step 1g-35, when the T316 timer has expired, the UE additionally stores information on the reason of the failure of the fast MCG link recovery operation in the RLF Report content. In this case, the following indicator information may be stored in the RLF Report content.
- An indicator to indicate if SCG transmission is (not) suspended
- An indicator to indicate if SCG is deactivated (e.g. SCG may deactivate while not identifying MCG RLF and MCGFailurelnformation)
- time information to indicate between the transmission of MCGFailureInformation and suspending SCG transmission
- time information to indicate between the transmission of and the initiation of PSCell change (or PSCell addition)

In Step 1g-40, when the transmission operation of the MCGFailureInformation message is not triggered, the UE additionally stores information indicating which condition is not satisfied in the RLF Report content. In this case, the following indicator information may be stored as the RLF Report content.
- An indicator to indicate if T316 is configured
- An indicator to indicate if SCG transmission is not suspended
- An indicator to indicate if the SCG is not deactivated
- An indicator to indicate if neither PSCell change nor PSCell addition is ongoing (i.e. timer T304 for the NR PSCell is not running in case of NR-DC or timer T307 of the E-UTRA PSCell is not running in NE-DC)
- time information to indicate between MCG failure (or transmitting MCGFailureInformation) and suspending SCG transmission
- time information to indicate between MCG failure (or transmitting MCGFailureInformation) and the initiation of PSCell change (or PSCell addition)

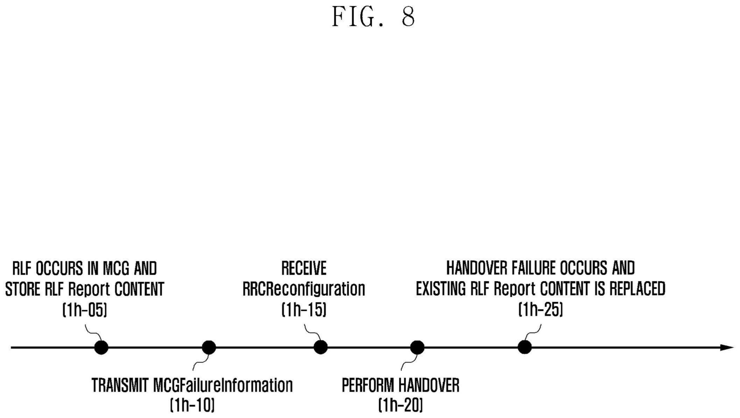

FIG. 8 is a diagram illustrating a problem in which previous RLF Report information is lost due to the handover failure according to one embodiment of the present disclosure.

Referring to FIG. 8, when the RLF occurs in the MCG, the UE stores information related to the RLF as the RLF Report content (1h-05). When the predetermined conditions are satisfied, the UE transmits an MCGFailureInformation message to the SCG (1h-10). In this case, information related to the fast MCG link recovery operation may also be additionally stored in the RLF Report content.

After transmitting the MCGFailureInformation message, the UE receives the RRCReconfiguration message containing the handover configuration information from the SCG (1h-15). Moreover, the UE performs the handover operation based on the handover configuration information received from the SCG (1h-20). When the handover failure (HOF) is detected for the handover operation, the UE stores information related to the handover failure as the RLF Report content (1h-25). In this case, since the previously stored RLF Report content is deleted due to the storage of the HOF-related information, the network cannot obtain information related to the fast MCG link recovery operation.

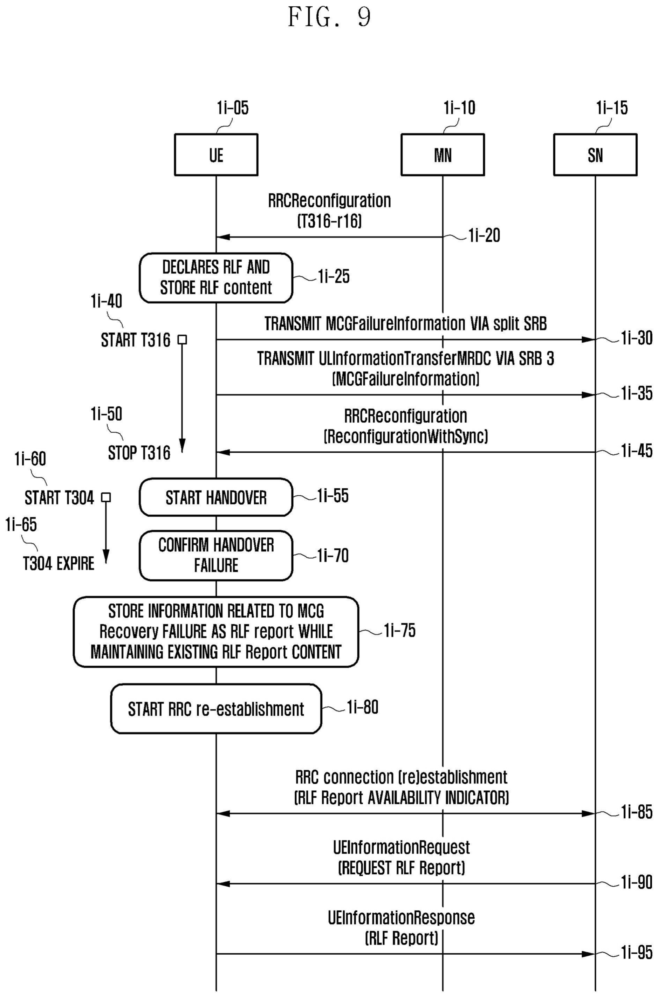

FIG. 9 is a flowchart illustrating operations for the UE reporting the fast MCG link recovery-related information after the handover failure according to one embodiment of the present disclosure.

An MN base station 1i-10 configures the fast MCG link recovery operation for a UE 1i-05 configured with Dual Connectivity using a predetermined RRC message, RRCReconfiguration (1i-20). This configuration contains the T316 timer value. Thereafter, when the RLF occurs during the connection with the MN, the UE 1i-05 declares the RLF and stores information related to the RLF as the RLF content (11-25). Furthermore, when the predetermined conditions are satisfied, the UE 1i-05 transmits the MCGFailureInformation message to the SN base station 1i-15 via Split SRB (1i-30) or the SRB 3 (1i-35). Herein, the predetermined conditions are as follows.
- if T316 is configured
- if SCG transmission is not suspended
- if the SCG is not deactivated
- if neither PSCell change nor PSCell addition is ongoing (i.e. timer T304 for the NR PSCell is not running in case of NR-DC or timer T307 of the E-UTRA PSCell is not running in NE-DC)

Although not illustrated in the drawings, the SN 1i-15 that has received the MCGFailureInformation message transmitted by the UE 1i-05 delivers the MCGFailureInformation message to the MN 1i-10. Meanwhile, the UE 1i-05 that has transmitted the MCGFailureInformation message runs the T316 timer (1i-40). When the UE 1i-05 receives the RRCReconfiguration message containing the handover configuration information from the SN 1i-15 before the T316 timer expires (1i-45), the UE li-05 considers the fast MCG link recovery successful and stops the running T316 timer (1i-50).

Furthermore, the UE 1i-05 triggers the handover operation based on the received handover configuration information (1i-55). In this case, the UE 1i-05 that initiated the handover operation runs the T304 timer (1i-60). When the handover is not successfully completed until the time the T304 timer expires (1i-65), the UE 1i-05 considers the handover to have failed (1i-70). According to the existing technology, the previously stored RLF Report content is deleted, and information related to the handover failure is stored as the RLF Report content. In contrast, in the present embodiment, when the triggered handover is triggered according to the fast MCG link recovery operation, the previously stored RLF Report content is not deleted, and certain information is additionally stored in the RLF Report content (1i-75). That is, the following information may be additionally stored in the RLF Report content.
- An indication to indicate if the failed HO was resulted from Fast MCG Recovery
- An indication to indicate if there was Fast MCG Recovery procedure before the failed HO
- Handover-related information, e.g. target cell-related info (PCI, CGI of target cell)
- Serving cell/neighboring cells measurement results at the handover failure
- time information to indicate between the MCG RLF (i.e. RLF happening at MCG) and the handover failure
- time information to indicate between the transmission of MCGFailureInformation (or initiation of MCG failure information procedure) and the handover failure
- time information to indicate between the reception of RRCReconfiguration (HO Command) in response of MCGFailureInformation, and the handover failure

In another embodiment, the RLF Report content may be newly stored with information related to the handover failure, and additional information related to the Fast MCG Link Recovery may be stored. For example, the following information may be additionally stored as information related to the Fast MCG Link Recovery.
- An indication to indicate if the failed HO was resulted from Fast MCG Recovery
- An indication to indicate if there was Fast MCG Recovery procedure before the failed HO
- Serving cell/neighboring cells measurement results at the reception of RRCReconfiguration (HO Command) in response of MCGFailureInformation
- time information to indicate between the MCG RLF (i.e. RLF happening at MCG) and the handover failure
- time information to indicate between the transmission of MCGFailureInformation (or initiation of MCG failure information procedure) and the handover failure
- time information to indicate between the reception of RRCReconfiguration (HO Command) in response of MCGFailureInformation, and the handover failure

In another embodiment, the UE may store both the existing RLF Report content containing information related to the Fast MCG link recovery and the RLF Report content containing information related to the handover failure. In this case, the RLF Report content containing information related to the handover failure may additionally include the following information.
- An indication to indicate if the failed HO was resulted from Fast MCG Recovery
- An indication to indicate if there was Fast MCG Recovery procedure before the failed HO
- time information to indicate between the MCG RLF (i.e. RLF happening at MCG) and the handover failure
- time information to indicate between the transmission of MCGFailureInformation (or initiation of MCG failure information procedure) and the handover failure
- time information to indicate between the reception of RRCReconfiguration (HO Command) in response of MCGFailureInformation, and the handover failure

Thereafter, the UE 1i-05 triggers the RRC re-establishment operation (1i-80). The UE 1i-05 then performs the RRC (re)establishment operation to transition to the connected mode at a predetermined base station (1i-85). In this drawing, the SN is illustrated as the base station where the UE performs the RRC connection (re)establishment, but is not limited thereto, and the UE may perform the connection (re)establishment operation with other base stations. In this case, the UE 1i-05 includes an availability indicator indicating that the the RLF Report is stored in the RRCSetupComplete or RRCReetablishmentComplete message, and transmits to the base station. The base station requests reporting of the RLF Report using the UEInformationRequest message (11-90). The UE 1i-05, which has received the request, reports the RLF Report stored in the UE 1i-05 to the base station using the UEInformationResponse message (1i-95).

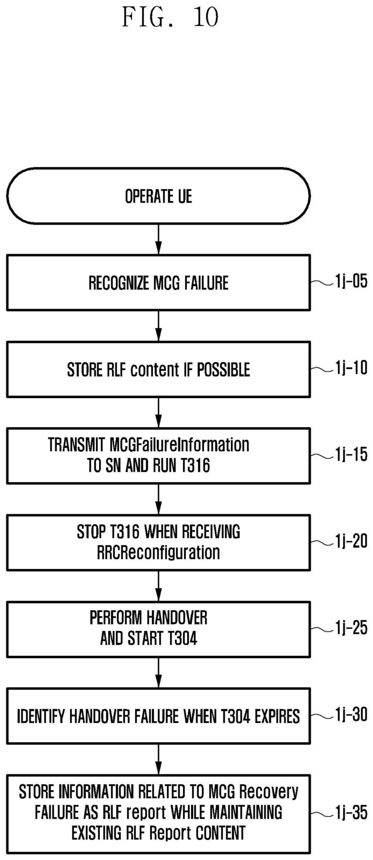

FIG. 10 is a flowchart illustrating the operation for the UE reporting the fast MCG link recovery-related information after the handover failure according to one embodiment of the present disclosure.

In Step 1j-05, the UE recognizes the MCG failure.

In Step 1j-10, the UE stores the valid information related to the MCG failure as the RLF content.

In Step 1j-15, the UE transmits the MCGFailureInformation to the SN base station and runs the T316 timer.

In Step 1j-20, the UE receives the RRCReconfiguration message containing the handover configuration information from the SN base station. In this case, the UE stops the running T316 timer. In addition, in this case, information related to the fast MCG link recovery may be additionally stored in the RLF report content.

In Step 1j-25, the UE performs the handover according to the configuration information and runs the T304 timer.

In Step 1j-30, the UE considers the handover failed when the T304 timer expires.

In Step 1j-35, when the triggered handover is triggered according to the fast MCG link recovery operation, the UE does not delete the previously stored RLF Report and additionally stores predetermined information as the RLF Report content. Specifically, the predetermined information additionally stored in the RLF Report content may include the following indicator information.
- An indication to indicate if the failed HO was resulted from Fast MCG Recovery

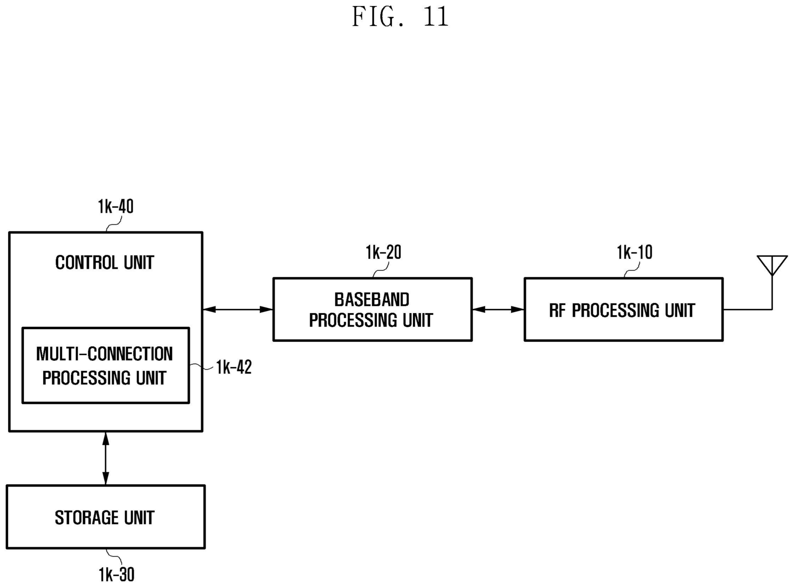

FIG. 11 is a block diagram illustrating the internal structure of a terminal to which the present disclosure is applied.

Referring to the drawing, the terminal includes a Radio Frequency (RF) processing unit 1k-10, a baseband processing unit 1k-20, a storage unit 1k-30, and a control unit 1k-40.

The RF processing unit 1k-10 performs functions for transmitting and receiving signals through a wireless channel, such as signal band conversion and amplification. That is, the RF processing unit 1k-10 up-converts the baseband signal provided from the baseband processing unit 1k-20 into an RF band signal and transmits the RF band signal through an antenna, and down-converts the RF band signal received through the antenna into a baseband signal. For example, the RF processing unit 1k-10 may include a transmission filter, a reception filter, an amplifier, a mixer, an oscillator, a digital to analog convertor (DAC), an analog to digital convertor (ADC), or the like. In the drawing, only one antenna is illustrated, but the terminal may be equipped with a plurality of antennas. In addition, the RF processing unit 1k-10 may include a plurality of RF chains. Furthermore, the RF processing unit 1k-10 may perform beamforming. For the beamforming, the RF processing unit 1k-10 may adjust the phase and amplitude of each signal transmitted and received through the plurality of antennas or antenna elements. Furthermore, the RF processing unit can perform multiple input multiple output (MIMO) and receive multiple layers during the MIMO operation.

The baseband processing unit 1k-20 performs a conversion function between baseband signals and bit streams according to physical layer specifications of the system. For example, during data transmission, the baseband processing unit 1k-20 encodes and modulates a transmission bit stream to generate complex symbols. Furthermore, during data reception, the baseband processing unit 1k-20 demodulates and decodes the baseband signal provided from the RF processing unit 1k-10 to reconstruct the received bit stream. For example, in the case of an orthogonal frequency division multiplexing (OFDM) method, when transmitting data, the baseband processing unit 1k-20 generates the complex symbols by encoding and modulating the transmission bit stream, maps the complex symbols to subcarriers, and then configures OFDM symbols through an inverse fast Fourier transform (IFFT) operation and a cyclic prefix (CP) insertion. In addition, when receiving data, the baseband processing unit 1k-20 divides the baseband signal provided from the RF processing unit 1k-10 into OFDM symbol units, reconstructs the signals mapped to subcarriers through a fast Fourier transform (FFT) operation, and then reconstructs the received bit stream through demodulation and decoding.

The baseband processing unit 1k-20 and the RF processing unit 1k-10 transmit and receive signals as described above. Accordingly, the baseband processing unit 1k-20 and the RF processing unit 1k-10 may be referred to as a transmitter, a receiver, a transceiver, or a communication unit. Furthermore, at least one of the baseband processing unit 1k-20 and the RF processing unit 1k-10 may include a plurality of communication modules to support a plurality of different wireless access technologies. In addition, at least one of the baseband processing unit 1k-20 and the RF processing unit 1k-10 may include different communication modules to process signals of different frequency bands. For example, the different wireless access technologies may include wireless LAN (e.g., IEEE 802.11), a cellular network (e.g., LTE), or the like. In addition, the different frequency bands may include a super high frequency (SHF) (e.g., 2.NRHz, NRhz) band, a millimeter wave (mm wave) (e.g., 60GHz) band.

The storage unit 1k-30 stores data such as basic programs, application programs, and configuration information for the operation of the terminal. In particular, the storage unit 1k-30 may store information related to a second access node that performs wireless communication using a second wireless access technology. Furthermore, the storage unit 1k-30 provides the stored data upon request from the control unit 1k-40.

The control unit 1k-40 controls the overall operations of the terminal. For example, the control unit 1k-40 transmits and receives signals through the baseband processing unit 1k-20 and the RF processing unit 1k-10. Furthermore, the control unit 1k-40 records and reads data from the storage unit 1k-30. To this end, the control unit 1k-40 may include at least one processor. For example, the control unit 1k-40 may include a communication processor (CP) that performs control for communication and an application processor (AP) that controls higher layers such as application programs.

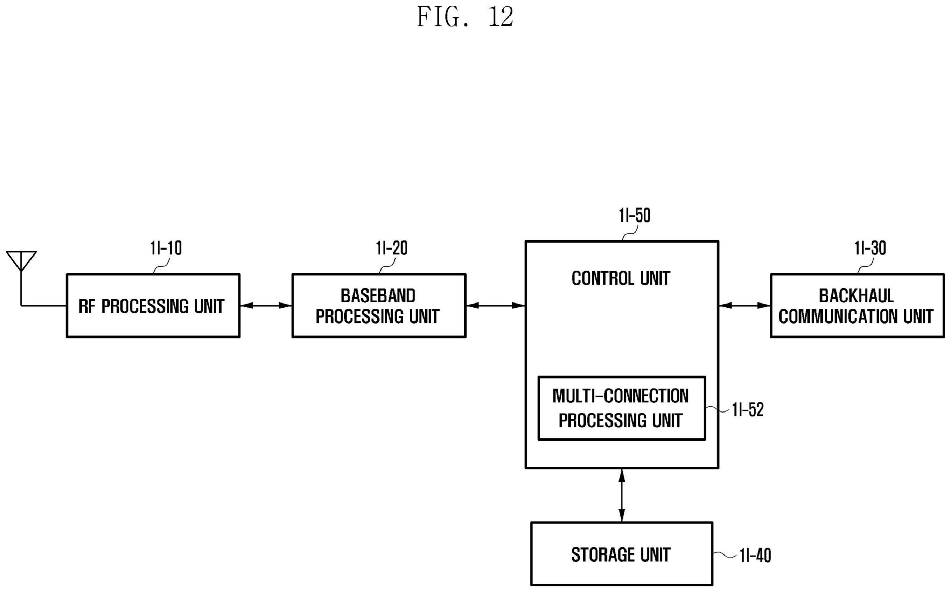

FIG. 12 is a block diagram illustrating the configuration of a base station according to the present disclosure.

As illustrated in the drawing, the base station includes an RF processing unit 11-10, a baseband processing unit 11-20, a backhaul communication unit 11-30, a storage unit 11-40, and a control unit 11-50.

The RF processing unit 11-10 performs functions for transmitting and receiving signals via a wireless channel, such as signal bandwidth conversion and amplification. That is, the RF processing unit 11-10 upconverts the baseband signal provided from the baseband processing unit 11-20 into an RF band signal and transmits the RF band signal via an antenna, and down-converts the RF band signal received via the antenna into a baseband signal. For example, the RF processing unit 11-10 may include a transmit filter, a reception filter, an amplifier, a mixer, an oscillator, a DAC, an ADC, or the like. In the drawing, only one antenna is illustrated, but the first access node may include a plurality of antennas. In addition, the RF processing unit 11-10 may include a plurality of RF chains. Furthermore, the RF processing unit 11-10 may perform beamforming. For beamforming, the RF processing unit 11-10 may adjust the phase and amplitude of each signal transmitted and received through the plurality of antennas or antenna elements. The RF processing unit may perform a downlink MIMO operation by transmitting one or more layers.

The baseband processing unit 11-20 performs a conversion function between baseband signals and bit streams according to the physical layer specifications of the first wireless access technology. For example, during data transmission, the baseband processing unit 11-20 encodes and modulates a transmission bit stream to generate complex symbols. Furthermore, when data reception, the baseband processing unit 11-20 reconstructs a reception bit stream by demodulating and decoding the baseband signal provided from the RF processing unit 11-10. For example, in the case of the OFDM method, when transmitting data, the baseband processing unit 11-20 generates the complex symbols by encoding and modulating the transmission bit stream, maps the complex symbols to subcarriers, and then configures OFDM symbols through the IFFT operations and CP insertion. In addition, when receiving data, the baseband processing unit 11-20 divides the baseband signal provided from the RF processing unit 11-10 into OFDM symbol units, reconstructs signals mapped to subcarriers through the FFT operation, and then reconstructs the received bit stream through the demodulation and decoding. The baseband processing unit 11-20 and the RF processing unit 11-10 transmit and receive signals as described above. Accordingly, the baseband processing unit 11-20 and the RF processing unit 11-10 may be referred to as a transmitter, a receiver, a transceiver, a communication unit, or a wireless communication unit.

The backhaul communication unit 11-30 provides an interface for communicating with other nodes within the network. That is, the backhaul communication unit 11-30 converts the bit streams transmitted from the serving base station to other nodes, such as auxiliary base stations and core networks, into physical signals, and converts the physical signals received from other nodes into the bit streams.

The storage unit 11-40 stores data such as basic programs, application programs, and configuration information for the operation of the serving base station. In particular, the storage unit 11-40 may store information about bearers assigned to the connected terminals, measurement results reported from connected terminals, or the like. Furthermore, the storage unit 11-40 may store information that serves as a basis for determining whether to provide or terminate multiple connections to the terminal. Furthermore, the storage unit 11-40 provides the stored data according to the request of the control unit 11-50.

The control unit 11-50 controls the overall operations of the serving base station. For example, the control unit 11-50 transmits and receives signals through the baseband processing unit 11-20 and the RF processing unit 11-10 or through the backhaul communication unit 11-30. Furthermore, the control unit 11-50 records and reads data in the storage unit 11-40. To this end, the control unit 11-50 may include at least one processor.

While the detailed description of the present disclosure has described specific embodiments, it is clear that various modifications are possible without departing from the scope of the present disclosure. Therefore, the scope of the present disclosure should not be limited to the described embodiments, but should be determined not only by the scope of the claims described below, but also by equivalents thereof.

## Claims

1. A method performed by a terminal in a wireless communication system, the method comprising:
detecting a radio link failure (RLF) for a master cell group (MCG) among the MCG and a secondary cell group (SCG) for which dual connectivity (DC) is configured for the terminal;
transmitting, to the SCG, a first radio resource control (RRC) message to the SCG, in case that at least one condition for transmitting, to the SCG, the first RRC message including information indicating the RLF for the MCG is satisfied;
performing a procedure for configuring a connection with a target cell based on information related to the target cell, in case that a second RRC message including the information related to the target cell is received from the SCG; and
identifying a connection failure with the target cell,
wherein first information on the RLF for the MCG is stored in an RLF report, and
wherein second information on the connection failure is further stored in the RLF report in which the first information is stored.

2. The method of claim 1, wherein the second information includes information indicating whether the connection failure is triggered based on a transmission of the first RRC message.

3. The method of claim 1, further comprising:
starting a timer based on a transmission of the first RRC message,
wherein the second RRC message is received before the timer expires, and
wherein third information on the second RRC message is further stored in the RLF report.

4. The method of claim 3,
wherein the second RRC message includes an RRC message indicating redirection to the target cell or an RRC message indicating handover to the target cell, and
wherein the third information includes information related to the redirection or information related to the handover.

5. The method of claim 1,
wherein the at least one condition includes a condition in which a change of a primary secondary cell (PSCell) and an addition of the PSCell are not in progress.

6. The method of claim 1, further comprising:
in case that any of the at least one condition is not satisfied, storing an indicator indicating an unsatisfied condition in the RLF report.

7. The method of claim 1, wherein the first information and the second information are stored based on access stratum security activation.

8. A terminal in a wireless communication system, the terminal comprising:
a transceiver; and
a processor,
wherein the processor is configured to:
detects a radio link failure (RLF) for a master cell group (MCG) among the MCG and a secondary cell group (SCG) for which dual connectivity (DC) is configured for the terminal,
transmits, to the SCG, a first radio resource control (RRC) message to the SCG, in case that at least one condition for transmitting, to the SCG, the first RRC message including information indicating the RLF for the MCG is satisfied,
performs a procedure for configuring a connection with a target cell based on information related to the target cell, in case that a second RRC message including the information related to the target cell is received from the SCG, and
identifies a connection failure with the target cell,
wherein first information on the RLF for the MCG is stored in an RLF report, and
wherein second information on the connection failure is further stored in the RLF report in which the first information is stored.

9. The terminal of claim 8, wherein the second information includes information indicating whether the connection failure is triggered based on a transmission of the first RRC message.

10. The terminal of claim 8,
wherein the processor further configured to start a timer based on a transmission of the first RRC message,
wherein the second RRC message is received before the timer expires, and
wherein third information on the second RRC message is further stored in the RLF report.

11. The terminal of claim 10, wherein the second RRC message includes an RRC message indicating redirection to the target cell or an RRC message indicating handover to the target cell, and
wherein the third information includes information related to the redirection or information related to the handover.

12. The terminal of claim 8, wherein the at least one condition includes a condition in which a change of a primary secondary cell (PSCell) and an addition of the PSCell are not in progress.

13. The terminal of claim 8,
wherein the processor is further configured to, in case that any of the at least one condition is not satisfied, sotre an indicator indicating an unsatisfied condition in the RLF report.

14. The terminal of claim 8, wherein the first information and the second information are stored based on access stratum security activation.
